# EUROPEAN PATENT APPLICATION

(11) **EP 4 815 176 A1**
(43) Date of publication of application: **30.09.2026**
(21) Application number: 24914540.0
(22) Date of filing: 02.01.2024
(51) Int. Cl.: H01M 50/543

(54) **BATTERY CELL, BATTERY, AND ELECTRIC DEVICE**

(71) Applicant: Contemporary Amperex Technology Co., Limited, Ningde, Fujian 352100 (CN)
(72) Inventor: CHENG, Qi, Ningde, Fujian 352100 (CN); ZHOU, Wenlin, Ningde, Fujian 352100 (CN); YANG, Kaihuan, Ningde, Fujian 352100 (CN); KE, Haibo, Ningde, Fujian 352100 (CN); LI, Quankun, Ningde, Fujian 352100 (CN)
(74) Representative: Ran, Handong
(86) International application number: PCT/CN2024/070222
(87) International publication number: WO 2025/145303

(57) **Abstract**

A battery cell (20), a battery (100), and an electric device, relating to the technical field of batteries. The battery cell (20) comprises a casing (21), an electrode assembly (22), and an electrode terminal (23). The casing (21) has a wall portion (211), and a mounting hole (2111) is formed in the wall portion (211). The electrode assembly (22) is accommodated in the casing (21). The electrode terminal (23) comprises a pole (231) and a connecting member (232). The pole (231) passes through the mounting hole (2111). The pole (231) is electrically connected to the electrode assembly (22). In the thickness direction of the wall portion (211), the connecting member (232) is located on the side of the wall portion (211) facing away from the electrode assembly (22), and the connecting member (232) is connected to the pole (231). The connecting member (232) comprises a first material layer (2321) and a second material layer (2322) which are stacked in the thickness direction of the wall portion (211). The first material layer (2321) is located on the side of the second material layer (2322) facing away from the electrode assembly (22). The first material layer (2321) is electrically connected to the pole (231) and is connected to a flow convergence component. The melting point of the second material layer (2322) is greater than that of the first material layer (2321). According to the battery cell (20) of such structure, the thickness of the first material layer (2321) can be optimized while weld penetration of the connecting member (232) is reduced, so as to reduce the space occupied by the connecting member (232) in the thickness direction of the wall portion (211).

## Description

### TECHNICAL FIELD

This application relates to the field of battery technology, and specifically, to a battery cell, a battery, and an electric apparatus.

### BACKGROUND

In recent years, new energy vehicles have experienced rapid development. In the field of electric vehicles, traction batteries serve as power sources of electric vehicles and play an irreplaceable important role. With the vigorous promotion of new energy vehicles, the demand for traction battery products is increasingly high. As core components of new energy vehicles, batteries have high requirements for their performance. A battery cell of a battery typically includes a housing and an electrode assembly accommodated in the housing, and an electrode terminal is disposed on the housing. The electrode terminal is electrically connected to the electrode assembly to achieve input or output of electrical energy of the battery cell. However, the electrode terminal of an existing battery cell occupies a large space, resulting in low space utilization of the battery cell after pack assembly, which is not conducive to increasing the energy density of the battery.

### SUMMARY

Embodiments of this application provide a battery cell, a battery, and an electric apparatus, which can effectively increase the energy density of the battery.

According to a first aspect, an embodiment of this application provides a battery cell including a housing, an electrode assembly, and an electrode terminal, where the housing has a wall portion, the wall portion is provided with a mounting hole, and the mounting hole runs through the wall portion along a thickness direction of the wall portion; the electrode assembly is accommodated in the housing; the electrode terminal includes a pole and a connecting member; the pole extends through the mounting hole, and the pole is electrically connected to the electrode assembly; along the thickness direction of the wall portion, the connecting member is located on a side of the wall portion facing away from the electrode assembly, and the connecting member is connected to the pole; the connecting member includes a first material layer and a second material layer stacked along the thickness direction of the wall portion; the first material layer is located on a side of the second material layer facing away from the electrode assembly; the first material layer is electrically connected to the pole and configured to be connected to a busbar; and a melting point of the second material layer is higher than a melting point of the first material layer.

In the above technical solution, the electrode terminal includes the pole and the connecting member, the pole extends through the mounting hole, and the connecting member is located on the side of the wall portion facing away from the electrode assembly and connected to the pole, so that the electrode terminal is assembled on the wall portion. The connecting member is configured to include the first material layer and the second material layer stacked along the thickness direction of the wall portion, and the second material layer is located on a side of the first material layer facing the electrode assembly, so that the second material layer is located between the wall portion and the first material layer. In addition, the melting point of the second material layer is greater than the melting point of the first material layer, so that the second material layer can provide a certain separation and blocking effect when the first material layer is welded to the busbar for assembly, thereby reducing the risk of the connecting member being burned through and affecting other components. Therefore, the risk of the connecting member being burned through can be reduced without increasing the thickness of the first material layer. The battery cell using this structure can optimize the thickness of the first material layer while reducing the risk of the connecting member being burned through, reducing the space occupied by the connecting member in the thickness direction of the wall portion, thereby effectively improving the space utilization of the battery cell after pack assembly, and helping to increase the energy density of the battery with this battery cell.

In some embodiments, a melting point of the first material layer is MP₁, and a melting point of the second material layer is MP₂, satisfying MP₂ - MP₁ ≥ 200°C.

In the above technical solution, the melting point of the second material layer is set to be at least 200°C higher than the melting point of the first material layer, so that the phenomenon of the second material layer being melted when the first material layer is welded to the busbar for assembly can be further alleviated, thereby further improving the separation effect and blocking effect of the second material layer, and further reducing the risk of the connecting member being burned through.

In some embodiments, along the thickness direction of the wall portion, a thickness of the first material layer is D₁, and a thickness of the second material layer is D₂, satisfying 0.1 ≤ D₂ / D₁ ≤ 0.25.

In the above technical solution, the thickness of the second material layer is set to be at least 0.1 times the thickness of the first material layer, so that the second material layer has a sufficient thickness to perform separation and blocking when the first material layer is welded to the busbar for assembly, thereby alleviating the phenomenon of the second material layer being burned through. The thickness of the second material layer is set to be at most 0.25 times the thickness of the first material layer, so that the phenomenon of excessive waste of the thickness of the second material layer is reduced, helping to reduce the manufacturing cost of the connecting member, and reducing the space occupied by the second material layer in the thickness direction of the wall portion, thereby helping to improve the space utilization of the battery cell after pack assembly.

In some embodiments, the first material layer and the second material layer are compositely connected to each other.

In the above technical solution, the first material layer and the second material layer are connected to each other through a composite connection structure, so that the structural strength and connection stability of the first material layer and the second material layer can be effectively improved, thereby helping to reduce the risk of mutual separation between the first material layer and the second material layer.

In some embodiments, a material of the first material layer includes aluminum, and a material of the second material layer includes steel.

In the above technical solution, setting the material of the first material layer to be aluminum and correspondingly setting the material of the second material layer to be steel can reduce the manufacturing cost of the connecting member and allow the melting point of the second material layer to be much higher than the melting point of the first material layer, so that the second material layer has a better separation and blocking effect when the first material layer is welded to the busbar for assembly, thereby effectively reducing the risk of the connecting member being burned through.

In some embodiments, the pole includes a body portion and an abutting portion, where the body portion extends through the mounting hole along the thickness direction of the wall portion, and the body portion is connected to the connecting member; the abutting portion abuts against a side of the wall portion facing the electrode assembly, and the abutting portion cooperates with the connecting member to clamp the wall portion so as to fasten the electrode terminal to the wall portion.

In the above technical solution, the pole is provided with the body portion extending through the mounting hole, and two ends of the body portion in the thickness direction of the wall portion are respectively connected to the abutting portion and the connecting member, so that the abutting portion and the connecting member located on two sides of the wall portion in the thickness direction of the wall portion can cooperate to clamp the wall portion so as to assemble the electrode terminal to the wall portion, featuring a simple structure and easy assembly.

In some embodiments, the body portion is riveted to the first material layer.

In the above technical solution, the body portion of the pole is riveted to the first material layer of the connecting member, so that the assembly connection between the pole and the connecting member is achieved, featuring a simple structure, easy assembly, and high structural stability, thereby helping to reduce the phenomenon of connection failure between the pole and the connecting member.

In some embodiments, the electrode terminal is insulatively mounted on the wall portion.

In the above technical solution, the electrode terminal is insulatively mounted on the wall portion, so that no electrical connection is formed between the electrode terminal and the wall portion, thereby helping the electrode terminal to input or output electrical energy of the battery cell, and reducing the risk of short circuits in the battery cell.

In some embodiments, the battery cell further includes a first insulating member and a second insulating member; along the thickness direction of the wall portion, the first insulating member is at least partially disposed between the connecting member and the wall portion, and the first insulating member is configured to insulatively isolate the connecting member and the wall portion; and along the thickness direction of the wall portion, the second insulating member is at least partially disposed between the pole and the wall portion, and the second insulating member is configured to insulatively isolate the pole and the wall portion.

In the above technical solution, the first insulating member is disposed between the connecting member and the wall portion, so that the first insulating member can insulatively isolate the wall portion and the connecting member, thereby reducing the risk of short circuits between the wall portion and the connecting member. Correspondingly, the second insulating member is disposed between the pole and the wall portion, so that the second insulating member can insulatively isolate the wall portion and the pole, thereby reducing the risk of short circuits between the wall portion and the pole. Furthermore, the first insulating member and the second insulating member are respectively disposed on two sides of the wall portion, so that the electrode terminal is insulatively mounted on the wall portion.

In some embodiments, the battery cell further includes a sealing member, where the sealing member is disposed between the wall portion and the pole, the sealing member is at least partially located in the mounting hole, and the sealing member is configured to seal a gap between the pole and a wall surface of the mounting hole.

In the above technical solution, the sealing member is disposed between the wall portion and the pole of the electrode terminal, and the sealing member is at least partially located in the mounting hole, so that the sealing member can seal the gap between the pole and the wall surface of the mounting hole, thereby effectively reducing the phenomenon of an electrolyte inside the battery cell overflowing from the mounting hole, and improving the use stability and use reliability of the battery cell.

In some embodiments, along the thickness direction of the wall portion, an accommodating groove is provided on the side of the wall portion facing away from the electrode assembly, the mounting hole is provided on a bottom surface of the accommodating groove, and the first insulating member is at least partially accommodated in the accommodating groove.

In the above technical solution, the provision of the accommodating groove configured to accommodate the first insulating member on the side of the wall portion facing away from the electrode assembly helps to assemble the first insulating member between the connecting member and the wall portion. This can position the first insulating member during assembly, thereby helping to reduce the assembly difficulty of the first insulating member. In addition, this can also provide a certain protection for the first insulating member, thereby reducing the phenomena such as wear or damage of the first insulating member during use.

In some embodiments, the second material layer is welded to the wall portion.

In the above technical solution, the second material layer of the connecting member is welded to the wall portion, so that the connecting member of the electrode terminal is a structure electrically connected to the wall portion of the housing, so as to output or input electrical energy of the battery cell. The battery cell using this structure does not need to provide an insulating member for insulation isolation between the connecting member and the wall portion, thereby helping to reduce the manufacturing cost and assembly difficulty of the battery cell.

In some embodiments, the second material layer is welded to the wall portion and forms a weld mark, and the weld mark surrounds an outer side of the mounting hole.

In the above technical solution, the weld mark formed by welding the second material layer to the wall portion is configured as a structure surrounding the outer side of the mounting hole, so that the weld mark formed by welding the second material layer to the wall portion surrounds the mounting hole. Thus, the weld mark can seal the gap between the connecting member and the wall portion, thereby eliminating the need to provide a sealing component for sealing between the pole and the wall surface of the mounting hole, and helping to reduce the manufacturing cost and assembly difficulty of the battery cell.

In some embodiments, a material of the second material layer is the same as a material of the wall portion.

In the above technical solution, the material of the second material layer is set to be the same as the material of the wall portion, so that the second material and the wall portion are structures that are made of the same material and welded to each other. This can reduce the welding difficulty between the second material layer and the wall portion, and also reduce the phenomena such as poor welding or welding failure between the second material layer and the wall portion, thereby helping to improve the welding quality between the second material layer and the wall portion.

In some embodiments, along the thickness direction of the wall portion, an accommodating groove is provided on the side of the wall portion facing away from the electrode assembly, the mounting hole is provided on a bottom surface of the accommodating groove, the connecting member is at least partially accommodated in the accommodating groove, and the second material layer is welded to the bottom surface of the accommodating groove.

In the above technical solution, the accommodating groove configured to accommodate the connecting member is provided on the side of the wall portion facing away from the electrode assembly. This can position the connecting member during assembly, thereby helping to reduce the welding difficulty between the wall portion and the second material layer of the connecting member, and improving the welding quality between the wall portion and the second material layer of the connecting member. In addition, this can also provide a certain protection for the connecting member, thereby reducing the phenomena such as wear or damage of the connecting member during use.

In some embodiments, the housing includes a housing body and an end cover, where an accommodating cavity having an opening is formed inside the housing body; the accommodating cavity is configured to accommodate the electrode assembly; the end cover seals the opening; and the end cover is the wall portion.

In the above technical solution, the wall portion of the housing is configured as the end cover of the housing that seals the opening of the housing body, so that the battery cell using this structure facilitates the assembly of the electrode terminal on the end cover and also facilitates the assembly and connection between the pole of the electrode terminal and the electrode assembly, thereby helping to reduce the assembly difficulty of the battery cell, and improving the production efficiency of the battery cell.

In some embodiments, the housing includes a housing body and an end cover, where the housing body includes a side wall and the wall portion that are integrally formed; the side wall surrounds the wall portion; along the thickness direction of the wall portion, one end of the side wall is connected to the wall portion, and another end encloses an opening; the side wall and the wall portion jointly define an accommodating cavity configured to accommodate the electrode assembly; and the end cover seals the opening.

In the above technical solution, the wall portion of the housing is configured as a wall of the housing body opposite to the end cover in the thickness direction of the wall portion, so that the battery cell using this structure can make a region of the housing where the electrode terminal is mounted away from the end cover, and there is no direct connection between the wall portion and the end cover, thereby alleviating the phenomenon that the force generated when components such as the electrode terminal pull or twist the wall portion acts on the end cover, reducing the risk of connection failure between the end cover and the housing body, and further helping to reduce the risk of electrolyte leakage of the battery cell during use.

According to a second aspect, an embodiment of this application further provides a battery including the above battery cell.

In some embodiments, the battery further includes a busbar, where the busbar is welded to the first material layer such that the busbar is electrically connected to the pole.

In the above technical solution, the busbar is welded to the first material layer of the connecting member, so that the electrical connection between the busbar and the electrode terminal is achieved, thereby allowing the busbar to input or output electrical energy of the battery cell. The connecting member is configured to include the first material layer and the second material layer stacked along the thickness direction of the wall portion, and the second material layer is located on a side of the first material layer facing the electrode assembly, so that the second material layer is located between the wall portion and the first material layer. In addition, the melting point of the second material layer is greater than the melting point of the first material layer, so that the second material layer can provide a certain separation and blocking effect when the first material layer is welded to the busbar for assembly, thereby reducing the risk of the connecting member being burned through and affecting other components. Therefore, the risk of the connecting member being burned through can be reduced without increasing the thickness of the first material layer. The battery cell using this structure can optimize the thickness of the first material layer while reducing the risk of the connecting member being burned through, reducing the space occupied by the connecting member in the thickness direction of the wall portion, thereby effectively improving the space utilization of the battery cell after pack assembly, and helping to increase the energy density of the battery with this battery cell.

In some embodiments, a material of the busbar is the same as the material of the first material layer.

In the above technical solution, the material of the busbar is set to be the same as the material of the first material layer, so that the busbar and the first material layer are structures that are made of the same material and welded to each other. This can reduce the welding difficulty between the busbar and the first material layer, and also reduce the phenomena such as poor welding or welding failure between the busbar and the first material layer, thereby helping to improve the welding quality between the busbar and the first material layer.

According to a third aspect, an embodiment of this application further provides an electric apparatus including the above battery cell, where the battery cell is configured to provide electrical energy.

### BRIEF DESCRIPTION OF DRAWINGS

To more clearly illustrate the technical solutions of the embodiments of this application, the accompanying drawings to be used in the description of the embodiments will be briefly described below. It should be understood that the following accompanying drawings only illustrate some embodiments of this application and thus should not be considered as limiting the scope. For those of ordinary skill in the art, other related accompanying drawings can be obtained based on these accompanying drawings without creative efforts.
FIG. 1 is a schematic structural diagram of a vehicle according to some embodiments of this application;
FIG. 2 is an exploded view of a structure of a battery according to some embodiments of this application;
FIG. 3 is a schematic structural diagram of a battery cell according to some embodiments of this application;
FIG. 4 is an exploded view of a structure of a battery cell according to some embodiments of this application;
FIG. 5 is a partial cross-sectional view of a battery cell according to some embodiments of this application;
FIG. 6 is a cross-sectional view of an electrode terminal of a battery cell according to some embodiments of this application; and
FIG. 7 is a partial cross-sectional view of a battery cell according to some other embodiments of this application.

Reference signs: 1000. vehicle; 100. battery; 10. box; 11. first box body; 12. second box body; 20. battery cell; 21. housing; 211. wall portion; 2111. mounting hole; 2112. accommodating groove; 212. housing body; 2121. opening; 213. end cover; 22. electrode assembly; 221. tab; 23. electrode terminal; 231. pole; 2311. body portion; 2312. abutting portion; 232. connecting member; 2321. first material layer; 2321a. riveting hole; 2322. second material layer; 24. current collecting member; 25. pressure relief mechanism; 26. first insulating member; 27. second insulating member; 28. sealing member; 200. controller; 300. motor; and X. thickness direction of wall portion.

### DESCRIPTION OF EMBODIMENTS

To make the objectives, technical solutions, and advantages of the embodiments of this application clearer, the technical solutions in the embodiments of this application will be clearly described below with reference to the accompanying drawings in the embodiments of this application. Apparently, the described embodiments are only some embodiments of this application, rather than all of the embodiments. Based on the embodiments in this application, all other embodiments obtained by those of ordinary skill in the art without creative efforts fall within the protection scope of this application.

Unless otherwise defined, all technical and scientific terms used in this application have the same meanings as commonly understood by those of ordinary skill in the art to which this application belongs. The terms used in the specification of this application are only for the purpose of describing specific embodiments and are not intended to limit this application. The terms "include", "comprise", "have", and any variations thereof in the specification and claims of this application and the above description of the drawings are intended to cover non-exclusive inclusions. The terms "first", "second", and the like in the specification and claims of this application or the above drawings are used to distinguish different objects, rather than to describe a specific order or primary-secondary relationship.

Reference to "embodiment" in this application means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise clearly specified and limited, the terms "mounting", "connection", "join", and "attachment" should be understood in a broad sense. For example, they may refer to a fixed connection, a detachable connection, or an integral connection, and may refer to a direct connection, an indirect connection via an intermediate medium, or an internal communication between two elements. For those of ordinary skill in the art, the specific meanings of the above terms in this application can be understood according to specific circumstances.

The term "and/or" in this application is merely an association relationship describing associated objects, indicating that three relationships may exist. For example, A and/or B may indicate the following three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated apparatuses in the embodiments of this application are merely for illustrative purposes and should not constitute any limitations on this application.

In this application, "a plurality of" refers to two or more (including two).

In the embodiments of this application, the battery cell may be a secondary battery. The secondary battery refers to a battery cell whose active material can be activated for continuous use through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the embodiments of this application.

A battery cell typically includes an electrode assembly. The electrode assembly includes a positive electrode, a negative electrode, and a separator. During the charging and discharging of the battery cell, active ions (for example, lithium ions) are intercalated and deintercalated back and forth between the positive electrode and the negative electrode. The separator is disposed between the positive electrode and the negative electrode to prevent short circuits between the positive and negative electrodes and to allow active ions to pass through.

In some embodiments, the positive electrode may be a positive electrode sheet. The positive electrode sheet may include a positive electrode current collector and a positive electrode active material provided on at least one surface of the positive electrode current collector.

As an example, the positive electrode current collector has two opposite surfaces in its thickness direction. The positive electrode active material is provided on either or both of the two opposite surfaces of the positive electrode current collector.

As an example, the positive electrode current collector may adopt a metal foil or a composite current collector. For example, as the metal foil, aluminum with silver-plated surface, stainless steel with silver-plated surface, stainless steel, copper, aluminum, nickel, carbon electrode, carbon, nickel, titanium, or the like can be used. The composite current collector may include a polymer material substrate and a metal layer. The composite current collector can be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and respective modified compounds thereof. However, this application is not limited to these materials, and other conventional materials that can be used as battery positive electrode active materials can also be used. These positive electrode active materials can be used alone or in combination of two or more. An example of the lithium-containing phosphate may include but is not limited to at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. An example of the lithium transition metal oxide may include but is not limited to at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), or LiNi_{0.8}Co_{0.1}Mn_{0.1}O₂ (also abbreviated as NCM811)), lithium nickel cobalt aluminum oxide (such as LiNi_{0.85}Co_{0.15}Al_{0.05}O₂), and modified compounds thereof.

In some embodiments, the positive electrode may adopt foam metal. The foam metal may be foam nickel, foam copper, foam aluminum, foam alloy, or the like. When the foam metal serves as the positive electrode, the surface of the foam metal may be not provided with a positive electrode active material, or certainly may be provided with a positive electrode active material. As an example, the foam metal may also be filled and/or deposited with a lithium source material, potassium metal, or sodium metal, where the lithium source material is lithium metal and/or a lithium-rich material.

In some embodiments, the negative electrode may be a negative electrode sheet. The negative electrode sheet may include a negative electrode current collector.

As an example, the negative electrode current collector may adopt a metal foil, foam metal, or a composite current collector. For example, as the metal foil, aluminum or stainless steel with silver-plated surface, stainless steel, copper, aluminum, nickel, carbon electrode, nickel, titanium, or the like can be used. The foam metal may be foam nickel, foam copper, foam aluminum, foam alloy, or the like. The composite current collector may include a polymer material substrate and a metal layer. The composite current collector can be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the negative electrode sheet may include a negative electrode current collector and a negative electrode active material provided on at least one surface of the negative electrode current collector.

As an example, the negative electrode current collector has two opposite surfaces in its thickness direction. The negative electrode active material is provided on either or both of the two opposite surfaces of the negative electrode current collector.

As an example, the negative electrode active material may adopt a negative electrode active material for battery cells well known in the art. As an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, this application is not limited to these materials, and other conventional materials that can be used as battery negative electrode active materials can also be used. These negative electrode active materials can be used alone or in combination of two or more.

In some embodiments, a material of the positive electrode current collector may be aluminum, and a material of the negative electrode current collector may be copper.

In some embodiments, the electrode assembly further includes a separator. The separator is disposed between the positive electrode and the negative electrode.

In some embodiments, the separator is a separation film. The separation film may be of various types, and any well-known porous separation film with good chemical stability and mechanical stability can be selected.

As an example, a material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, materials of the layers may be the same or different. The separator may be a separate component located between the positive and negative electrodes or attached to the surfaces of the positive and negative electrodes.

In some embodiments, the separator is a solid-state electrolyte. The solid-state electrolyte is provided between the positive electrode and the negative electrode to transmit ions and separate the positive electrode from the negative electrode.

In some embodiments, the battery cell further includes an electrolyte. The electrolyte functions to conduct ions between the positive and negative electrodes. The electrolyte may be in a liquid state, a gel state, or a solid state. The liquid-state electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel-state electrolyte includes a polymer serving as a skeleton network of the electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of an oxide solid electrolyte (crystalline perovskite, a sodium superionic conductor, garnet, or an amorphous LiPON film), a sulfide solid electrolyte (a crystalline lithium superionic conductor (lithium germanium phosphorus sulfur or argyrodite), or amorphous sulfide), a halide solid electrolyte, a nitride solid electrolyte, and a hydride solid electrolyte.

As an example, the composite solid-state electrolyte is formed by adding an inorganic solid-state electrolyte filler to a polymer solid electrolyte.

In some embodiments, the electrode assembly is a wound structure. The positive electrode sheet and the negative electrode sheet are wound into a wound structure.

In some embodiments, the electrode assembly is a laminated structure.

As an example, a plurality of positive electrode sheets and a plurality of negative electrode sheets may be provided, and the plurality of positive electrode sheets and the plurality of negative electrode sheets are alternately stacked.

As an example, a plurality of positive electrode sheets may be provided, the negative electrode sheet is folded to form a plurality of stacked folding sections, and one positive electrode sheet is sandwiched between adjacent folding sections.

As an example, both the positive electrode sheet and the negative electrode sheet are folded to form a plurality of stacked folding sections.

As an example, a plurality of separators may be provided and respectively disposed between any adjacent positive electrode sheets or negative electrode sheets.

As an example, the separators may be consecutively disposed, which are disposed between any adjacent positive electrode sheets or negative electrode sheets by folding or winding.

In some embodiments, the electrode assembly may be in a cylindrical shape, a flat shape, a polygonal prism shape, or the like.

In some embodiments, the electrode assembly is provided with a tab, and the tab can lead current out from the electrode assembly. The tab includes a positive tab and a negative tab.

In some embodiments, the battery cell may include a housing. The housing is configured to encapsulate components such as the electrode assembly and the electrolyte. The housing may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of another shape, where the prismatic battery cell includes but is not limited to a square shell battery cell, a blade-shaped battery cell, a polygonal prismatic battery. The polygonal prismatic battery is, for example, a hexagonal prism battery.

The battery mentioned in the embodiments of this application refers to a single physical module that includes one or more battery cells to provide higher voltage and capacity.

In some embodiments, the battery may be a battery module. When a plurality of battery cells are provided, the plurality of battery cells are arranged and fixed to form a battery module.

In some embodiments, the battery may be a battery pack. The battery pack includes a box and a battery cell, and the battery cell or battery module is accommodated in the box.

In some embodiments, the box may be a part of a chassis structure of a vehicle. For example, a part of the box may become at least part of a floor of the vehicle, or a part of the box may become at least part of a cross beam and longitudinal beam of the vehicle.

In some embodiments, the battery may be an energy storage apparatus. The energy storage apparatus includes an energy storage container, an energy storage cabinet, and the like.

Batteries have outstanding advantages such as high energy density, low environmental pollution, high power density, long service life, wide application range, and low self-discharge rate, and serve as an important part of the development of new energy at present. The development of battery technology requires consideration of multiple design factors at the same time, such as performance parameters including energy density, cycle life, discharge capacity, and charge-discharge rate, and also requires consideration of the production quality of the batteries in the production process.

For a general battery cell, the battery cell typically includes a housing and an electrode assembly accommodated in the housing, and an electrode terminal is assembled on the housing. The electrode terminal is connected to the electrode assembly and a busbar of a battery, so that the input or output of electrical energy of the battery cell can be achieved. To reduce the assembly difficulty of the electrode terminal and improve the assembly stability of the electrode terminal, in the related art, the electrode terminal is provided with a pole and a riveting block. The pole extends through a mounting hole in the housing, and the pole is connected to the electrode assembly. The riveting block is located on an outer side of the housing, and the pole is riveted to the riveting block. In this way, the electrode terminal is assembled on the housing. The riveting block is welded to the busbar of the battery, so that the input or output of electrical energy of the battery cell can be achieved. However, in the battery cell of this structure, to reduce the risk of the riveting block being burned through when welded to the busbar, the thickness of the riveting block is typically large. However, the riveting block is disposed on the outer side of the housing, and after pack assembly of the battery cell, a region where the riveting block is disposed outside the battery cell in a protruding manner is wasted and cannot be effectively utilized, resulting in low space utilization of the battery cell after pack assembly, which is not conducive to increasing the energy density of the battery.

Based on the above considerations, to solve the problem of low space utilization of the battery cell after pack assembly, an embodiment of this application provides a battery cell. The battery cell includes a housing, an electrode assembly, and an electrode terminal. The housing has a wall portion. The wall portion is provided with a mounting hole. The mounting hole runs through the wall portion along a thickness direction of the wall portion. The electrode assembly is accommodated in the housing. The electrode terminal includes a pole and a connecting member. The pole extends through the mounting hole, and the pole is electrically connected to the electrode assembly. Along the thickness direction of the wall portion, the connecting member is located on a side of the wall portion facing away from the electrode assembly, and the connecting member is connected to the pole. The connecting member includes a first material layer and a second material layer stacked along the thickness direction of the wall portion. The first material layer is located on a side of the second material layer facing away from the electrode assembly, and the first material layer is electrically connected to the pole and configured to be connected to a busbar. A melting point of the second material layer is higher than a melting point of the first material layer.

In the battery cell of this structure, the electrode terminal includes the pole and the connecting member, the pole extends through the mounting hole, and the connecting member is located on the side of the wall portion facing away from the electrode assembly and connected to the pole, so that the electrode terminal is assembled on the wall portion. The connecting member is configured to include the first material layer and the second material layer stacked along the thickness direction of the wall portion, and the second material layer is located on a side of the first material layer facing the electrode assembly, so that the second material layer is located between the wall portion and the first material layer. In addition, the melting point of the second material layer is greater than the melting point of the first material layer, so that the second material layer can provide a certain separation and blocking effect when the first material layer is welded to the busbar for assembly, thereby reducing the risk of the connecting member being burned through and affecting other components. Therefore, the risk of the connecting member being burned through can be reduced without increasing the thickness of the first material layer. The battery cell using this structure can optimize the thickness of the first material layer while reducing the risk of the connecting member being burned through, reducing the space occupied by the connecting member in the thickness direction of the wall portion, thereby effectively improving the space utilization of the battery cell after pack assembly, and helping to increase the energy density of the battery with this battery cell.

The battery cell disclosed in this embodiment of this application can be used, but is not limited to being used, in electric apparatuses such as vehicles, ships, or aircraft. The battery cell, the battery, and the like disclosed in this application may be used to constitute a power supply system of the electric apparatus. This helps to alleviate the problem of low space utilization of the battery cell after pack assembly, thereby increasing the energy density of the battery.

An embodiment of this application provides an electric apparatus using a battery as a power source. The electric apparatus may be but is not limited to a mobile phone, a tablet, a notebook computer, an electric toy, an electric tool, an electric bicycle, an electric vehicle, a ship, an aerospace vehicle, or the like. The electric toy may include a fixed or mobile electric toy, such as a game console, an electric toy car, an electric toy ship, or an electric toy airplane. The aerospace vehicle may include an airplane, a rocket, a space shuttle, a spaceship, and the like.

For ease of description, an electric apparatus according to an embodiment of this application being a vehicle is used as an example for description of the following embodiments.

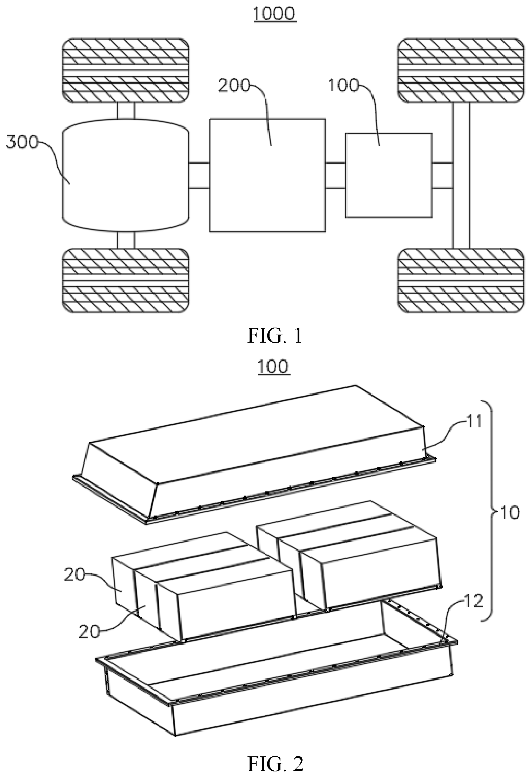

Referring to FIG. 1, FIG. 1 is a schematic structural diagram of a vehicle 1000 according to some embodiments of this application. The vehicle 1000 may be a fossil fuel vehicle, a gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom of the vehicle 1000, or at the head of the vehicle 1000, or at the tail of the vehicle 1000. The battery 100 may be configured to supply power to the vehicle 1000. For example, the battery 100 may serve as an operating power source or a usage power source of the vehicle 1000. The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of this application, the battery 100 can not only serve as an operating power source or a usage power source of the vehicle 1000, but also as a driving power source of the vehicle 1000, replacing or partially replacing fossil fuel or natural gas to provide driving power for the vehicle 1000.

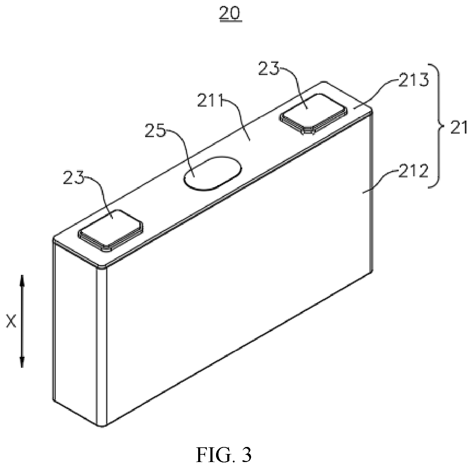

Referring to FIGs. 2 and 3, FIG. 2 is an exploded view of a structure of a battery 100 according to some embodiments of this application, and FIG. 3 is a schematic structural diagram of a battery cell 20 according to some embodiments of this application. The battery 100 includes a box 10 and a battery cell 20. The battery cell 20 is configured to be accommodated in the box 10.

The box 10 is configured to provide an assembly space for the battery cell 20, and the box 10 may adopt various structures. In some embodiments, the box 10 may include a first box body 11 and a second box body 12. The first box body 11 and the second box body 12 fit each other, so that the first box body 11 and the second box body 12 jointly define an assembly space for accommodating the battery cell 20. The second box body 12 may be a hollow structure with an opening at one end. The first box body 11 may be a plate-like structure. The first box body 11 covers an opening side of the second box body 12, so that the first box body 11 and the second box body 12 jointly define the assembly space. Alternatively, the first box body 11 and the second box body 12 may each be a hollow structure with an opening on one side. The opening side of the first box body 11 is engaged with the opening side of the second box body 12.

Certainly, the box 10 formed by the first box body 11 and the second box body 12 may be of various shapes, such as a cylinder, a cuboid, or a cube. Exemplarily, in FIG. 2, the shape of the box 10 is a cuboid.

In the battery 100, one or more battery cells 20 may be disposed in the box 10. When a plurality of battery cells 20 are disposed in the box 10, the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety formed by the plurality of battery cells 20 is accommodated in the box 10; or certainly, the battery 100 may alternatively be formed by a plurality of battery cells 20 being connected in series, parallel or series-parallel first to form a battery module and then a plurality of battery modules being connected in series, parallel, or series-parallel to form an entirety which is accommodated in the box 10.

In some embodiments, the battery 100 may further include another structure. For example, the battery 100 may further include a busbar. The busbar is configured to connect a plurality of battery cells 20, so as to achieve an electrical connection between the plurality of battery cells 20. The busbar functions to connect the plurality of battery cells 20 in series, parallel, or series-parallel. A material of the busbar may be copper, iron, aluminum, aluminum alloy, or the like.

Each battery cell 20 may be a secondary battery or a primary battery, or may be a lithium-sulfur battery, a sodium-ion battery, or a magnesium-ion battery, but is not limited thereto. The battery cell 20 may be of a cuboid shape, a cylinder shape, a prism shape, or other shapes. Exemplarily, in FIG. 3, the battery cell 20 is a cuboid structure.

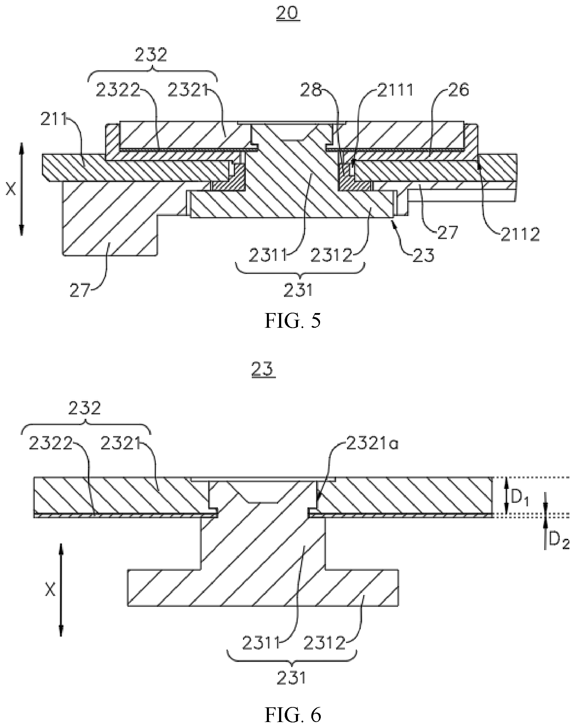

According to some embodiments of this application, referring to FIG. 3, and further referring to FIGs. 4, 5, and 6, FIG. 4 is an exploded view of a structure of a battery cell 20 according to some embodiments of this application, FIG. 5 is a partial cross-sectional view of a battery cell 20 according to some embodiments of this application, and FIG. 6 is a cross-sectional view of an electrode terminal 23 of a battery cell 20 according to some embodiments of this application. This application provides a battery cell 20. The battery cell 20 includes a housing 21, an electrode assembly 22, and an electrode terminal 23. The housing 21 has a wall portion 211. The wall portion 211 is provided with a mounting hole 2111. The mounting hole 2111 runs through the wall portion 211 along a thickness direction X of the wall portion. The electrode assembly 22 is accommodated in the housing 21. The electrode terminal 23 includes a pole 231 and a connecting member 232. The pole 231 extends through the mounting hole 2111, and the pole 231 is electrically connected to the electrode assembly 22. Along the thickness direction X of the wall portion, the connecting member 232 is located on a side of the wall portion 211 facing away from the electrode assembly 22, and the connecting member 232 is connected to the pole 231. The connecting member 232 includes a first material layer 2321 and a second material layer 2322 stacked along the thickness direction X of the wall portion. The first material layer 2321 is located on a side of the second material layer 2322 facing away from the electrode assembly 22. The first material layer 2321 is electrically connected to the pole 231 and configured to be connected to a busbar. A melting point of the second material layer 2322 is higher than a melting point of the first material layer 2321.

The housing 21 may alternatively be configured to accommodate an electrolyte, such as a liquid electrolyte. The housing 21 may be of various structural forms. The housing 21 may also be made of various materials, such as copper, iron, aluminum, steel, and aluminum alloy.

In some embodiments, the housing 21 may include a housing body 212 and an end cover 213. An accommodating cavity is formed inside the housing body 212. The accommodating cavity has an opening 2121, that is, the housing body 212 is a hollow structure with an opening at one end. The end cover 213 covers the opening 2121 of the housing body 212 and forms a sealed connection, so as to form a sealed space for accommodating the electrode assembly 22 and the electrolyte.

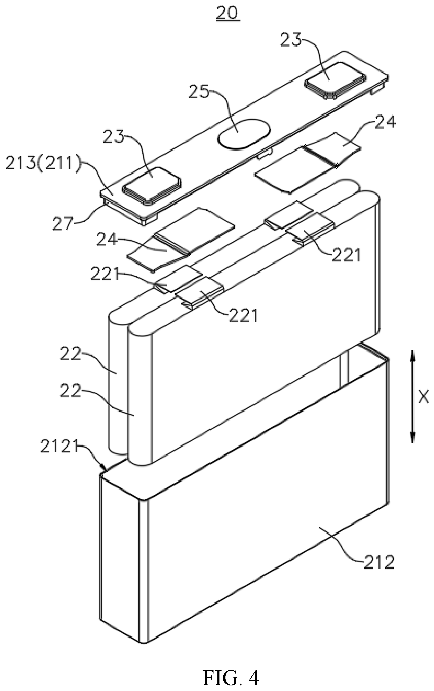

Optionally, the wall portion 211 configured for mounting the electrode terminal 23 and provided with the mounting hole 2111 may be the end cover 213 or one wall among multiple walls of the housing body 212. Exemplarily, in FIGs. 3 and 4, the wall portion 211 is the end cover 213 of the housing 21. Certainly, in another embodiment, the wall portion 211 may alternatively be a bottom wall of the housing body 212 opposite to the end cover 213 in the thickness direction X of the wall portion, or a side wall adjacent to and abutting against the end cover 213.

During assembly of the battery cell 20, the electrode assembly 22 may be first placed into the housing body 212, and the electrolyte is injected into the housing body 212, and then the end cover 213 covers the opening 2121 of the housing body 212 to seal the opening 2121 of the housing body 212.

The mounting hole 2111 runs through the wall portion 211 along the thickness direction X of the wall portion, that is, the mounting hole 2111 extends along the thickness direction X of the wall portion and extends through surfaces of two sides of the wall portion 211.

The housing body 212 may be of various shapes, such as a cylinder and a cuboid. The shape of the housing body 212 can be determined based on a specific shape of the electrode assembly 22. For example, if the electrode assembly 22 is a cylindrical structure, the housing body 212 may adopt a cylindrical structure; if the electrode assembly 22 is a cuboid structure, the housing body 212 may adopt a cuboid structure. Certainly, the end cover 213 may alternatively adopt various structures. For example, the end cover 213 is a plate-like structure or a hollow structure with an opening at one end. Exemplarily, in FIG. 4, the housing body 212 is a cuboid structure, and the end cover 213 is a plate-like structure.

It can be understood that the housing 21 is not limited to the above structure, and the housing 21 may alternatively be another structure. For example, the housing 21 includes a housing body 212 and two end covers 213. The housing body 212 is a hollow structure with openings 2121 on two opposite sides. One end cover 213 correspondingly covers one opening 2121 of the housing body 212 and forms a sealed connection, so as to form a sealed space for accommodating the electrode assembly 22 and the electrolyte.

The electrode assembly 22 is a component in the battery cell 20 where electrochemical reactions occur. The electrode assembly 22 may adopt various structures. For example, the electrode assembly 22 may be a wound structure formed by winding a positive electrode sheet, a separator, and a negative electrode sheet, or a stacked structure formed by stacking a positive electrode sheet, a separator, and a negative electrode sheet.

Exemplarily, the separator is a separation film. A main material of the separation film may be selected from at least one of glass fiber, non-woven fabric, polyethylene, polypropylene, and polyvinylidene fluoride.

A tab 221 is formed at an end of the electrode assembly 22 close to the wall portion 211 in the thickness direction X of the wall portion. The tab 221 is configured to input or output a positive electrode or negative electrode of the electrode assembly 22, and the tab 221 is configured to be connected to the electrode terminal 23, so as to achieve an electrical connection between the electrode assembly 22 and the electrode terminal 23. It should be noted that the tab 221 of the electrode assembly 22 is a component formed by stacking and connecting regions on the positive electrode sheet uncoated with positive electrode active material layers, or a component formed by stacking and connecting regions on the negative electrode sheet uncoated with negative electrode active material layers. If the tab 221 is configured to output the positive electrode of the electrode assembly 22, the tab 221 is a component formed by stacking and connecting regions on the positive electrode sheet uncoated with positive electrode active material layers; if the tab 221 is configured to output the negative electrode of the electrode assembly 22, the tab 221 is a component formed by stacking and connecting regions on the negative electrode sheet uncoated with negative electrode active material layers.

Exemplarily, a material of the tab 221 may be copper or aluminum.

Optionally, one or more electrode assemblies 22 may be accommodated in the housing 21. Exemplarily, in FIG. 4, the housing 21 of the battery cell 20 is internally provided with two electrode assemblies 22. The two electrode assemblies 22 are stacked along a thickness direction, that is, the two electrode assemblies 22 are stacked along a thickness direction of the battery cell 20. Certainly, in another embodiment, one, three, four, five, six, seven, eight, or more electrode assemblies 22 may be accommodated in the housing 21.

The electrode terminal 23 functions to output or input electrical energy of the battery cell 20. One end of the electrode terminal 23 is configured to be connected to the tab 221 of the electrode assembly 22, and another end is configured to be connected to the busbar, so as to achieve input or output of electrical energy of the battery cell 20.

The electrode terminal 23 includes a pole 231 and a connecting member 232. The pole 231 and the connecting member 232 are connected to each other. The pole 231 is configured to be electrically connected to the electrode assembly 22. The connecting member 232 is configured to be electrically connected to the busbar, so as to electrically connect the electrode assembly 22 and the busbar, thereby outputting or inputting electrical energy of the battery cell 20.

The pole 231 extends through the mounting hole 2111, that is, the pole 231 passes through the mounting hole 2111, and two ends of the pole 231 in the thickness direction X of the wall portion both extend out of the mounting hole 2111, so that the pole 231 is partially located in the mounting hole 2111. In this way, the pole 231 can be connected to both the electrode assembly 22 located inside the housing 21 and the connecting member 232 located on the side of the wall portion 211 facing away from the electrode assembly 22, so as to fasten the pole 231 to the wall portion 211.

In FIG. 5, the pole 231 partially abuts against a side of the wall portion 211 facing the electrode assembly 22, that is, the pole 231 has a portion located on the side of the wall portion 211 facing the electrode assembly 22, and the portion overlaps with the wall portion 211 in the thickness direction X of the wall portion, so that the pole 231 can abut against the side of the wall portion 211 facing the electrode assembly 22 along the thickness direction X of the wall portion, and the pole 231 can cooperate with the connecting member 232 located on the side of the wall portion 211 facing away from the electrode assembly 22 to clamp the wall portion 211 so as to assemble the electrode terminal 23 to the wall portion 211. It should be noted that the pole 231 may directly abut against the side of the wall portion 211 facing the electrode assembly 22, or may indirectly abut against the side of the wall portion 211 facing the electrode assembly 22 through other components.

The pole 231 is configured to be connected to the electrode assembly 22, so as to achieve an electrical connection between the electrode assembly 22 and the electrode terminal 23. Optionally, the pole 231 may be directly connected to the tab 221 of the electrode assembly 22, or may be indirectly connected to the tab 221 of the electrode assembly 22 through other components.

In some embodiments, referring to FIG. 4, the battery cell 20 may further include a current collecting member 24. The current collecting member 24 is disposed in the housing 21, and the current collecting member 24 is connected to the pole 231 of the electrode terminal 23 and the tab 221 of the electrode assembly 22, so as to achieve an electrical connection between the electrode assembly 22 and the electrode terminal 23.

Exemplarily, the current collecting member 24 is welded to the pole 231 and the tab 221. Certainly, in another embodiment, the current collecting member 24 may alternatively abut against or be bonded to the pole 231. Similarly, the current collecting member 24 may alternatively abut against or be bonded to the tab 221.

The current collecting member 24 functions to connect the pole 231 of the electrode terminal 23 and the tab 221 of the electrode assembly 22. The current collecting member 24 may be made of various materials. For example, the material of the current collecting member 24 may be copper, iron, aluminum, steel, aluminum alloy, or the like.

In FIG. 4, the battery cell 20 includes two electrode terminals 23 and two current collecting members 24. Correspondingly, each electrode assembly 22 has two tabs 221, and the two tabs 221 have opposite polarities. The two electrode terminals 23 are electrically connected to the two tabs 221 of the electrode assembly 22 through the two current collecting members 24 respectively, so as to achieve input or output of the positive electrode and negative electrode of the battery cell 20.

Optionally, the two electrode terminals 23 are both mounted on the wall portion 211. Each electrode terminal 23 is electrically connected to one tab 221 of the electrode assembly 22, so as to output the positive electrode and negative electrode of the battery cell 20. Certainly, in another embodiment, the two electrode terminals 23 may alternatively be mounted on different walls of the housing 21. For example, in some embodiments, the two electrode terminals 23 may alternatively be respectively disposed on two opposite walls of the housing 21 in the thickness direction X of the wall portion.

The connecting member 232 is located on the side of the wall portion 211 facing away from the electrode assembly 22, and the connecting member 232 is connected to the pole 231. That is, the connecting member 232 is located on an outer side of the housing 21, and the connecting member 232 is connected to a portion of the pole 231 extending out of an end of the mounting hole 2111 facing away from the electrode assembly 22, so that the connecting member 232 and the pole 231 can cooperate to clamp the wall portion 211 so as to assemble the electrode terminal 23 to the wall portion 211.

Exemplarily, an end of the pole 231 away from the electrode assembly 22 in the thickness direction X of the wall portion is riveted to the connecting member 232 so as to connect the pole 231 to the connecting member 232. Certainly, in another embodiment, the pole 231 and the connecting member 232 may alternatively be connected to each other through structures such as welding connection, snap-fitting, or bolt connection.

The connecting member 232 includes a first material layer 2321 and a second material layer 2322. Various connection structures may be present between the first material layer 2321 and the second material layer 2322, such as bonding, bolt connection, composite connection, or welding connection. Exemplarily, in an embodiment of this application, the first material layer 2321 and the second material layer 2322 are compositely connected to each other, such as by hot pressing or cold pressing.

The first material layer 2321 is located on a side of the second material layer 2322 facing away from the electrode assembly 22, that is, the second material layer 2322 is located between the first material layer 2321 and the wall portion 211 in the thickness direction X of the wall portion.

The first material layer 2321 is configured to be welded to the busbar, that is, the first material layer 2321 functions to be welded to the busbar of the battery 100, so that the battery cell 20 can be electrically connected to the busbar, thereby enabling the busbar to be electrically connected to the pole 231 through the first material layer 2321. Exemplarily, a side of the first material layer 2321 facing away from the electrode assembly 22 in the thickness direction X of the wall portion is welded to the busbar.

In some embodiments, referring to FIGs. 3 and 4, the battery cell 20 may further include a pressure relief mechanism 25. The pressure relief mechanism 25 is disposed on the housing 21, and the pressure relief mechanism 25 is configured to release internal pressure of the battery cell 20 when the internal pressure or temperature of the battery cell 20 reaches a predetermined value.

Optionally, the pressure relief mechanism 25 may be disposed on the end cover 213 of the housing 21 or the housing body 212 of the housing 21. Exemplarily, in FIGs. 3 and 4, the pressure relief mechanism 25 is disposed on the end cover 213.

Similarly, the pressure relief mechanism 25 and the housing 21 may be integrally formed or separately disposed. Exemplarily, in FIG. 4, the pressure relief mechanism 25 and the housing 21 are separately disposed, and the pressure relief mechanism 25 may be connected to the housing 21 by welding or the like. Correspondingly, the pressure relief mechanism 25 may be a pressure relief member such as an explosion-proof valve, an explosion-proof sheet, a gas valve, a pressure relief valve, or a safety valve. Certainly, in another embodiment, the pressure relief mechanism 25 and the housing 21 may alternatively be integrally formed, and the pressure relief mechanism 25 is a region on the housing 21 where a weakened structure is formed, for example, a region on the housing 21 where a score groove is formed.

In this embodiment, the electrode terminal 23 includes the pole 231 and the connecting member 232, the pole 231 extends through the mounting hole 2111, and the connecting member 232 is located on the side of the wall portion 211 facing away from the electrode assembly 22 and connected to the pole 231, so that the electrode terminal 23 is assembled on the wall portion 211. The connecting member 232 is configured to include the first material layer 2321 and the second material layer 2322 stacked along the thickness direction X of the wall portion, and the second material layer 2322 is located on a side of the first material layer 2321 facing the electrode assembly 22, so that the second material layer 2322 is located between the wall portion 211 and the first material layer 2321. In addition, the melting point of the second material layer 2322 is greater than the melting point of the first material layer 2321, so that the second material layer 2322 can provide a certain separation and blocking effect when the first material layer 2321 is welded to the busbar for assembly, thereby reducing the risk of the connecting member 232 being burned through and affecting other components. Therefore, the risk of the connecting member 232 being burned through can be reduced without increasing the thickness of the first material layer 2321. The battery cell 20 using this structure can optimize the thickness of the first material layer 2321 while reducing the risk of the connecting member 232 being burned through, reducing the space occupied by the connecting member 232 in the thickness direction X of the wall portion, thereby effectively improving the space utilization of the battery cell 20 after pack assembly, and helping to increase the energy density of the battery 100 with this battery cell 20.

According to some embodiments of this application, the melting point of the first material layer 2321 is MP₁, and the melting point of the second material layer 2322 is MP₂, satisfying MP₂ - MP₁ ≥ 200°C.

MP₂ - MP₁ ≥ 200°C, that is, a difference between the melting point of the second material layer 2322 and the melting point of the first material layer 2321 is greater than or equal to 200°C, which may be 200°C, 210°C, 220°C, 250°C, 280°C, 300°C, 350°C, 400°C, 450°C, 500°C, 550°C, 600°C, 650°C, 700°C, or the like.

Exemplarily, the material of the first material layer 2321 and the material of the busbar are aluminum, aluminum alloy, or the like. Correspondingly, the material of the second material layer 2322 may be steel, copper, iron, silver, or the like.

In these embodiments, the melting point of the second material layer 2322 is set to be at least 200°C higher than the melting point of the first material layer 2321, so that the phenomenon of the second material layer 2322 being melted when the first material layer 2321 is welded to the busbar for assembly can be further alleviated, thereby further improving the separation effect and blocking effect of the second material layer 2322, and further reducing the risk of the connecting member 232 being burned through.

According to some embodiments of this application, referring to FIG. 6, along the thickness direction X of the wall portion, a thickness of the first material layer 2321 is D₁, and a thickness of the second material layer 2322 is D₂, satisfying 0.1 ≤ D₂ / D₁ ≤ 0.25.

Exemplarily, the ratio of the thickness D₂ of the second material layer 2322 to the thickness D₁ of the first material layer 2321 may be 0.1, 0.11, 0.12, 0.13, 0.14, 0.15, 0.16, 0.17, 0.18, 0.19, 0.2, 0.21, 0.22, 0.23, 0.24, 0.25, or the like.

In these embodiments, the thickness of the second material layer 2322 is set to be at least 0.1 times the thickness of the first material layer 2321, so that the second material layer 2322 has a sufficient thickness to perform separation and blocking when the first material layer 2321 is welded to the busbar for assembly, thereby alleviating the phenomenon of the second material layer 2322 being burned through. The thickness of the second material layer 2322 is set to be at most 0.25 times the thickness of the first material layer 2321, so that the phenomenon of excessive waste of the thickness of the second material layer 2322 is reduced, helping to reduce the manufacturing cost of the connecting member 232, and reducing the space occupied by the second material layer 2322 in the thickness direction X of the wall portion, thereby helping to improve the space utilization of the battery cell 20 after pack assembly.

In some embodiments, the first material layer 2321 and the second material layer 2322 are compositely connected to each other.

There may be various composite connection manners for the first material layer 2321 and the second material layer 2322. For example, the first material layer 2321 and the second material layer 2322 may be connected to each other through composite processes such as hot pressing or cold pressing. Certainly, in another embodiment, the first material layer 2321 and the second material layer 2322 may alternatively be connected to each other through manners such as bonding, snap-fitting, or welding.

In these embodiments, the first material layer 2321 and the second material layer 2322 are connected to each other through a composite connection structure, so that the structural strength and connection stability of the first material layer 2321 and the second material layer 2322 can be effectively improved, thereby helping to reduce the risk of mutual separation between the first material layer 2321 and the second material layer 2322.

In some embodiments, a material of the first material layer 2321 includes aluminum, and a material of the second material layer 2322 includes steel. It should be noted that when the material of the first material layer 2321 is aluminum, the material of the second material layer 2322 may alternatively be copper, iron, silver, or the like.

In these embodiments, setting the material of the first material layer 2321 to be aluminum and correspondingly setting the material of the second material layer 2322 to be steel can reduce the manufacturing cost of the connecting member 232 and allow the melting point of the second material layer 2322 to be much higher than the melting point of the first material layer 2321, so that the second material layer 2322 has a better separation and blocking effect when the first material layer 2321 is welded to the busbar for assembly, thereby effectively reducing the risk of the connecting member 232 being burned through.

According to some embodiments of this application, referring to FIGs. 5 and 6, the pole 231 may include a body portion 2311 and an abutting portion 2312. The body portion 2311 extends through the mounting hole 2111 along the thickness direction X of the wall portion, and the body portion 2311 is connected to the connecting member 232. The abutting portion 2312 abuts against the side of the wall portion 211 facing the electrode assembly 22, and the abutting portion 2312 cooperates with the connecting member 232 to clamp the wall portion 211 so as to fasten the electrode terminal 23 to the wall portion 211.

The body portion 2311 of the pole 231 is a structure inserted into the mounting hole 2111 along the thickness direction X of the wall portion, and two ends of the body portion 2311 in the thickness direction X of the wall portion respectively extend out of two ends of the mounting hole 2111, so that the two ends of the body portion 2311 can be respectively connected to the connecting member 232 and the abutting portion 2312.

Optionally, various connection structures may be present between the connecting member 232 and the body portion 2311, such as welding, riveting, snap-fitting, or bolt connection.

The abutting portion 2312 abuts against the side of the wall portion 211 facing the electrode assembly 22, and the abutting portion 2312 cooperates with the connecting member 232 to clamp the wall portion 211. That is, the abutting portion 2312 is located on the side of the wall portion 211 facing the electrode assembly 22 in the thickness direction X of the wall portion, and the abutting portion 2312 at least partially overlaps with the wall portion 211 in the thickness direction X of the wall portion, so that the abutting portion 2312 can cooperate with the connecting member 232 to clamp the wall portion 211.

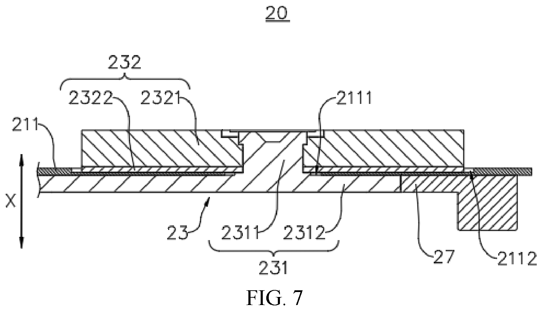

It should be noted that the abutting portion 2312 may directly abut against the side of the wall portion 211 facing the electrode assembly 22, or may indirectly abut against the side of the wall portion 211 facing the electrode assembly 22 through other components. Exemplarily, in FIG. 5, the electrode terminal 23 is a structure insulatively mounted on the wall portion 211, and a second insulating member 27 is disposed between the abutting portion 2312 of the pole 231 and the wall portion 211, so that the abutting portion 2312 indirectly abuts against the side of the wall portion 211 facing the electrode assembly 22 through the second insulating member 27. Referring to FIG. 7, FIG. 7 is a partial cross-sectional view of a battery cell 20 according to some other embodiments of this application, where the electrode terminal 23 is a structure electrically connected to the wall portion 211 of the housing 21, so that the abutting portion 2312 of the pole 231 directly abuts against the side of the wall portion 211 facing the electrode assembly 22.

Exemplarily, in FIG. 6, the body portion 2311 and the abutting portion 2312 are integrally formed, that is, the body portion 2311 and the abutting portion 2312 are formed as an integrated structure. The body portion 2311 and the abutting portion 2312 may be manufactured by integral forming processes such as casting, stamping, or milling. Certainly, in another embodiment, the body portion 2311 and the abutting portion 2312 may alternatively be separately disposed, that is, the body portion 2311 and the abutting portion 2312 may be alternatively separated. The abutting portion 2312 may be connected to an end of the body portion 2311 facing the electrode assembly 22 in the thickness direction X of the wall portion through manners such as welding, snap-fitting, or bolt connection.

In these embodiments, the pole 231 is provided with the body portion 2311 extending through the mounting hole 2111, and two ends of the body portion 2311 in the thickness direction X of the wall portion are respectively connected to the abutting portion 2312 and the connecting member 232, so that the abutting portion 2312 and the connecting member 232 located on two sides of the wall portion 211 in the thickness direction X of the wall portion can cooperate to clamp the wall portion 211 so as to assemble the electrode terminal 23 to the wall portion 211, featuring a simple structure and easy assembly.

In some embodiments, referring to FIG. 6, the body portion 2311 is riveted to the first material layer 2321.

The second material layer 2322 is provided with a channel through which the body portion 2311 passes in the thickness direction X of the wall portion. The first material layer 2321 is provided with a riveting hole 2321a. The riveting hole 2321a runs through two sides of the first material layer 2321 along the thickness direction X of the wall portion, and the riveting hole 2321a is in communication with the channel of the second material layer 2322. An end of the body portion 2311 away from the electrode assembly 22 in the thickness direction X of the wall portion is inserted into the riveting hole 2321a and riveted to the first material layer 2321.

In these embodiments, the body portion 2311 of the pole 231 is riveted to the first material layer 2321 of the connecting member 232, so that the assembly connection between the pole 231 and the connecting member 232 is achieved, featuring a simple structure, easy assembly, and high structural stability, thereby helping to reduce the phenomenon of connection failure between the pole 231 and the connecting member 232.

According to some embodiments of this application, referring to FIG. 5, the electrode terminal 23 is insulatively mounted on the wall portion 211. That is, no electrical connection is formed between the electrode terminal 23 and the housing 21.

In these embodiments, the electrode terminal 23 is insulatively mounted on the wall portion 211, so that no electrical connection is formed between the electrode terminal 23 and the wall portion 211, thereby helping the electrode terminal 23 to input or output electrical energy of the battery cell 20, and reducing the risk of short circuits in the battery cell 20.

In some embodiments, still referring to FIG. 5, the battery cell 20 may further include a first insulating member 26 and a second insulating member 27. Along the thickness direction X of the wall portion, the first insulating member 26 is at least partially disposed between the connecting member 232 and the wall portion 211, and the first insulating member 26 is configured to insulatively isolate the connecting member 232 and the wall portion 211. Along the thickness direction X of the wall portion, the second insulating member 27 is at least partially disposed between the pole 231 and the wall portion 211, and the second insulating member 27 is configured to insulatively isolate the pole 231 and the wall portion 211.

Optionally, the first insulating member 26 functions to insulatively isolate the connecting member 232 and the wall portion 211, and the first insulating member 26 may be made of various materials, such as rubber, silicone, or plastic. Similarly, the second insulating member 27 functions to insulatively isolate the pole 231 and the wall portion 211, and the second insulating member 27 may also be made of various materials, such as rubber, silicone, or plastic.

In these embodiments, the first insulating member 26 is disposed between the connecting member 232 and the wall portion 211, so that the first insulating member 26 can insulatively isolate the wall portion 211 and the connecting member 232, thereby reducing the risk of short circuits between the wall portion 211 and the connecting member 232. Correspondingly, the second insulating member 27 is disposed between the pole 231 and the wall portion 211, so that the second insulating member 27 can insulatively isolate the wall portion 211 and the pole 231, thereby reducing the risk of short circuits between the wall portion 211 and the pole 231. Furthermore, the first insulating member 26 and the second insulating member 27 are respectively disposed on two sides of the wall portion 211, so that the electrode terminal 23 is insulatively mounted on the wall portion 211.

In some embodiments, still referring to FIG. 5, the battery cell 20 may further include a sealing member 28. The sealing member 28 is disposed between the wall portion 211 and the pole 231, the sealing member 28 is at least partially located in the mounting hole 2111, and the sealing member 28 is configured to seal a gap between the pole 231 and a wall surface of the mounting hole 2111.

In the embodiments where the pole 231 includes the body portion 2311 and the abutting portion 2312, the sealing member 28 is sleeved on an outer side of the body portion 2311, and the sealing member 28 is located between the body portion 2311 and the wall surface of the mounting hole 2111, so that the sealing member 28 can seal the gap between the body portion 2311 and the wall surface of the mounting hole 2111.

The sealing member 28 is at least partially located in the mounting hole 2111, that is, the sealing member 28 may be entirely located in the mounting hole 2111, or only partially located in the mounting hole 2111. In FIG. 5, a portion of the sealing member 28 is located in the mounting hole 2111, and another portion is located between the wall portion 211 and the abutting portion 2312 of the pole 231.

Exemplarily, a material of the sealing member 28 may be rubber, silicone, plastic, or the like.

In these embodiments, the sealing member 28 is disposed between the wall portion 211 and the pole 231 of the electrode terminal 23, and the sealing member 28 is at least partially located in the mounting hole 2111, so that the sealing member 28 can seal the gap between the pole 231 and the wall surface of the mounting hole 2111, thereby effectively reducing the phenomenon of an electrolyte inside the battery cell 20 overflowing from the mounting hole 2111, and improving the use stability and use reliability of the battery cell 20.

In some embodiments, still referring to FIG. 5, along the thickness direction X of the wall portion, an accommodating groove 2112 is provided on the side of the wall portion 211 facing away from the electrode assembly 22, the mounting hole 2111 is provided on a bottom surface of the accommodating groove 2112, and the first insulating member 26 is at least partially accommodated in the accommodating groove 2112.

The mounting hole 2111 is provided on the bottom surface of the accommodating groove 2112, that is, the mounting hole 2111 is a structure running through the bottom surface of the accommodating groove 2112 along the thickness direction X of the wall portion.

Exemplarily, the first insulating member 26 is partially accommodated in the accommodating groove 2112. Certainly, in another embodiment, the first insulating member 26 may alternatively be entirely located in the accommodating groove 2112.

In these embodiments, the provision of the accommodating groove 2112 configured to accommodate the first insulating member 26 on the side of the wall portion 211 facing away from the electrode assembly 22 helps to assemble the first insulating member 26 between the connecting member 232 and the wall portion 211. This can position the first insulating member 26 during assembly, thereby helping to reduce the assembly difficulty of the first insulating member 26. In addition, this can also provide a certain protection for the first insulating member 26, thereby reducing the phenomena such as wear or damage of the first insulating member 26 during use.

According to some embodiments of this application, referring to FIG. 7, the second material layer 2322 is welded to the wall portion 211.

The second material layer 2322 is welded to the wall portion 211, so that the second material layer 2322 of the connecting member 232 is a structure electrically connected to the wall portion 211, so as to form an electrical connection between the electrode terminal 23 and the housing 21.

It should be noted that in the two electrode terminals 23 of the battery cell 20, if one electrode terminal 23 is a structure electrically connected to the housing 21, the other electrode terminal 23 is a structure insulatively mounted on the housing 21 (as shown in FIG. 5). Certainly, the battery cell 20 may alternatively be a structure in which the two electrode terminals 23 are both insulatively mounted on the housing 21.

In these embodiments, the second material layer 2322 of the connecting member 232 is welded to the wall portion 211, so that the connecting member 232 of the electrode terminal 23 is a structure electrically connected to the wall portion 211 of the housing 21, so as to output or input electrical energy of the battery cell 20. The battery cell 20 using this structure does not need to provide an insulating member for insulation isolation between the connecting member 232 and the wall portion 211, thereby helping to reduce the manufacturing cost and assembly difficulty of the battery cell 20.

In some embodiments, still referring to FIG. 7, the second material layer 2322 is welded to the wall portion 211 and forms a weld mark (not shown in the figure), and the weld mark surrounds an outer side of the mounting hole 2111. That is, the weld mark formed by welding the second material layer 2322 to the wall portion 211 is an annular structure surrounding the mounting hole 2111 and located between the second material layer 2322 and the wall portion 211.

In these embodiments, the weld mark formed by welding the second material layer 2322 to the wall portion 211 is configured as a structure surrounding the outer side of the mounting hole 2111, so that the weld mark formed by welding the second material layer 2322 to the wall portion 211 surrounds the mounting hole 2111. Thus, the weld mark can seal the gap between the connecting member 232 and the wall portion 211, thereby eliminating the need to provide a sealing component for sealing between the pole 231 and the wall surface of the mounting hole 2111, and helping to reduce the manufacturing cost and assembly difficulty of the battery cell 20.

In some embodiments, a material of the second material layer 2322 is the same as a material of the wall portion 211.

It should be noted that the material of the second material layer 2322 being the same as the material of the wall portion 211 means that a main component of the second material layer 2322 is the same as a main component of the wall portion 211. For example, if both the second material layer 2322 and the wall portion 211 are made of a single material, the second material layer 2322 and the wall portion 211 are composed of a same metal element; if the second material layer 2322 and the wall portion 211 are made of an alloy material or a mixed material, such as steel, the materials of the second material layer 2322 and the wall portion 211 being the same means that the main components of the second material layer 2322 and the wall portion 211 are the same. If the second material layer 2322 and the wall portion 211 differ only in the content of components, the second material layer 2322 and the wall portion 211 are also made of the same material.

In these embodiments, the material of the second material layer 2322 is set to be the same as the material of the wall portion 211, so that the second material and the wall portion 211 are structures that are made of the same material and welded to each other. This can reduce the welding difficulty between the second material layer 2322 and the wall portion 211, and also reduce the phenomena such as poor welding or welding failure between the second material layer 2322 and the wall portion 211, thereby helping to improve the welding quality between the second material layer 2322 and the wall portion 211.

In some embodiments, referring to FIG. 7, along the thickness direction X of the wall portion, an accommodating groove 2112 is provided on the side of the wall portion 211 facing away from the electrode assembly 22, the mounting hole 2111 is provided on a bottom surface of the accommodating groove 2112, the connecting member 232 is at least partially accommodated in the accommodating groove 2112, and the second material layer 2322 is welded to the bottom surface of the accommodating groove 2112.

The mounting hole 2111 is provided on the bottom surface of the accommodating groove 2112, that is, the mounting hole 2111 is a structure running through the bottom surface of the accommodating groove 2112 along the thickness direction X of the wall portion.

Exemplarily, the connecting member 232 is partially accommodated in the accommodating groove 2112, and the second material layer 2322 is located between the first material layer 2321 and the bottom surface of the accommodating groove 2112 in the thickness direction X of the wall portion. Certainly, in another embodiment, the connecting member 232 may alternatively be entirely located in the accommodating groove 2112.

In these embodiments, the accommodating groove 2112 configured to accommodate the connecting member 232 is provided on the side of the wall portion 211 facing away from the electrode assembly 22. This can position the connecting member 232 during assembly, thereby helping to reduce the welding difficulty between the wall portion 211 and the second material layer 2322 of the connecting member 232, and improving the welding quality between the wall portion 211 and the second material layer 2322 of the connecting member 232. In addition, this can also provide a certain protection for the connecting member 232, thereby reducing the phenomena such as wear or damage of the connecting member 232 during use.

According to some embodiments of this application, referring to FIG. 3 and FIG. 4, the housing 21 may include a housing body 212 and an end cover 213. An accommodating cavity having an opening 2121 is formed inside the housing body 212, and the accommodating cavity is configured to accommodate the electrode assembly 22. The end cover 213 seals the opening 2121, and the end cover 213 is the wall portion 211.

The end cover 213 is the wall portion 211, that is, the electrode terminal 23 is mounted on the end cover 213, and the mounting hole 2111 is provided on the end cover 213.

In these embodiments, the wall portion 211 of the housing 21 is configured as the end cover 213 of the housing 21 that seals the opening 2121 of the housing body 212, so that the battery cell 20 using this structure facilitates the assembly of the electrode terminal 23 on the end cover 213 and also facilitates the assembly and connection between the pole 231 of the electrode terminal 23 and the electrode assembly 22, thereby helping to reduce the assembly difficulty of the battery cell 20, and improving the production efficiency of the battery cell 20.

It should be noted that the structure of the battery cell 20 is not limited thereto. In some embodiments, the battery cell 20 may alternatively be another structure. For example, the housing 21 may include a housing body 212 and an end cover 213. The housing body 212 includes a side wall and the wall portion 211 that are integrally formed. The side wall surrounds the wall portion 211. Along the thickness direction X of the wall portion, one end of the side wall is connected to the wall portion 211, and the other end encloses an opening 2121. The side wall and the wall portion 211 jointly define an accommodating cavity configured to accommodate the electrode assembly 22. The end cover 213 seals the opening 2121. That is, the wall portion 211 is a bottom wall of the housing body 212 opposite to the end cover 213 in the thickness direction X of the wall portion. In other words, the electrode terminal 23 is mounted on the bottom wall of the housing body 212, and the mounting hole 2111 is provided on the bottom wall of the housing body 212.

The housing body 212 includes the side wall and the wall portion 211 that are integrally formed, that is, the housing body 212 is processed by an integral forming process, such as stamping, casting, or extrusion molding. In other words, the side wall and the wall portion 211 of the housing body 212 are formed as an integrated structure.

In these embodiments, the wall portion 211 of the housing 21 is configured as a wall of the housing body 212 opposite to the end cover 213 in the thickness direction X of the wall portion, so that the battery cell 20 using this structure can make a region of the housing 21 where the electrode terminal 23 is mounted away from the end cover 213, and there is no direct connection between the wall portion 211 and the end cover 213, thereby alleviating the phenomenon that the force generated when components such as the electrode terminal 23 pull or twist the wall portion 211 acts on the end cover 213, reducing the risk of connection failure between the end cover 213 and the housing body 212, and further helping to reduce the risk of electrolyte leakage of the battery cell 20 during use.

According to some embodiments of this application, this application further provides a battery 100, where the battery 100 includes the battery cell 20 according to any one of the foregoing solutions.

Referring to FIG. 2, the battery 100 may further include a box 10, and the battery cell 20 is accommodated in the box 10.

In some embodiments, the box 10 may include a first box body 11 and a second box body 12. The first box body 11 and the second box body 12 fit each other, so that the first box body 11 and the second box body 12 jointly define an assembly space for accommodating the battery cell 20.

Optionally, the second box body 12 may be a hollow structure with an opening at one end. The first box body 11 may be a plate-like structure. The first box body 11 covers an opening side of the second box body 12, so that the first box body 11 and the second box body 12 jointly define the assembly space. Alternatively, the first box body 11 and the second box body 12 may each be a hollow structure with an opening on one side. The opening side of the first box body 11 is engaged with the opening side of the second box body 12.

Certainly, the box 10 formed by the first box body 11 and the second box body 12 may be of various shapes, such as a cylinder or a cuboid. Exemplarily, in FIG. 2, the box 10 is a cuboid structure.

Optionally, one or more battery cells 20 may be disposed in the box 10. Exemplarily, in FIG. 2, a plurality of battery cells 20 are disposed in the box 10 of the battery 100, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety formed by the plurality of battery cells 20 is accommodated in the box 10; or certainly, the battery 100 may alternatively be formed by a plurality of battery cells 20 being connected in series, parallel or series-parallel first to form a battery module and then a plurality of battery modules being connected in series, parallel, or series-parallel to form an entirety which is accommodated in the box 10.

It should be noted that in some embodiments, the battery 100 may alternatively be not provided with the box 10. The battery 100 includes a plurality of battery cells 20. The battery 100 formed by the plurality of battery cells 20 may be directly assembled to an electric apparatus, so as to provide electrical energy for the electric apparatus through the plurality of battery cells 20. That is, the box 10 may be a part of the electric apparatus. Taking the electric apparatus being a vehicle 1000 as an example, the box 10 may be a part of a chassis structure of the vehicle 1000. For example, a part of the box 10 may become at least part of a floor of the vehicle 1000, or a part of the box 10 may become at least part of a cross beam and longitudinal beam of the vehicle 1000.

According to some embodiments of this application, referring to FIGs. 5 and 7, the battery 100 further includes a busbar (not shown in the figure). The busbar is welded to the first material layer 2321 such that the busbar is electrically connected to the pole 231.

The busbar is welded to the first material layer 2321 of the connecting member 232 of the electrode terminal 23, so that the busbar can be electrically connected to the electrode terminal 23, and the busbar can be electrically connected to a plurality of battery cells 20, thereby achieving series or parallel connection between the plurality of battery cells 20.

In these embodiments, the busbar is welded to the first material layer 2321 of the connecting member 232, so that the electrical connection between the busbar and the electrode terminal 23 is achieved, thereby allowing the busbar to input or output electrical energy of the battery cell 20. The connecting member 232 is configured to include the first material layer 2321 and the second material layer 2322 stacked along the thickness direction X of the wall portion, and the second material layer 2322 is located on a side of the first material layer 2321 facing the electrode assembly 22, so that the second material layer 2322 is located between the wall portion 211 and the first material layer 2321. In addition, the melting point of the second material layer 2322 is greater than the melting point of the first material layer 2321, so that the second material layer 2322 can provide a certain separation and blocking effect when the first material layer 2321 is welded to the busbar for assembly, thereby reducing the risk of the connecting member 232 being burned through and affecting other components. Therefore, the risk of the connecting member 232 being burned through can be reduced without increasing the thickness of the first material layer 2321. The battery cell 20 using this structure can optimize the thickness of the first material layer 2321 while reducing the risk of the connecting member 232 being burned through, reducing the space occupied by the connecting member 232 in the thickness direction X of the wall portion, thereby effectively improving the space utilization of the battery cell 20 after pack assembly, and helping to increase the energy density of the battery 100 with this battery cell 20.

In some embodiments, a material of the busbar is the same as the material of the first material layer 2321.

It should be noted that the material of the first material layer 2321 being the same as the material of the busbar means that a main component of the first material layer 2321 is the same as a main component of the busbar. For example, if both the first material layer 2321 and the busbar are made of a single material, such as aluminum, the first material layer 2321 and the busbar are composed of a same metal element; if the first material layer 2321 and the busbar are made of an alloy material or a mixed material, such as aluminum alloy, the materials of the first material layer 2321 and the busbar being the same means that the main components of the first material layer 2321 and the busbar are the same. If the first material layer 2321 and the busbar differ only in the content of components, the first material layer 2321 and the busbar are also made of the same material.

In these embodiments, the material of the busbar is set to be the same as the material of the first material layer 2321, so that the busbar and the first material layer 2321 are structures that are made of the same material and welded to each other. This can reduce the welding difficulty between the busbar and the first material layer 2321, and also reduce the phenomena such as poor welding or welding failure between the busbar and the first material layer 2321, thereby helping to improve the welding quality between the busbar and the first material layer 2321.

According to some embodiments of this application, this application further provides an electric apparatus. The electric apparatus includes the battery cell 20 according to any one of the foregoing solutions, and the battery cell 20 is configured to provide electrical energy for the electric apparatus.

The electric apparatus may be any device or system that uses the battery cell 20 described above.

According to some embodiments of this application, referring to FIGs. 3 to 6, this application provides a battery cell 20. The battery cell 20 includes a housing 21, an electrode assembly 22, an electrode terminal 23, a first insulating member 26, a second insulating member 27, and a sealing member 28. The housing 21 has a wall portion 211. The wall portion 211 is provided with a mounting hole 2111. The mounting hole 2111 runs through the wall portion 211 along a thickness direction X of the wall portion. The housing 21 includes a housing body 212 and an end cover 213. An accommodating cavity having an opening 2121 is formed inside the housing body 212. The end cover 213 seals the opening 2121, and the end cover 213 is the wall portion 211. The electrode assembly 22 is accommodated in the accommodating cavity. The electrode terminal 23 is insulatively mounted on the wall portion 211, and the electrode terminal 23 includes a pole 231 and a connecting member 232. The pole 231 includes a body portion 2311 and an abutting portion 2312. The body portion 2311 extends through the mounting hole 2111 along the thickness direction X of the wall portion. The abutting portion 2312 abuts against a side of the wall portion 211 facing the electrode assembly 22, and the abutting portion 2312 is electrically connected to a tab 221 of the electrode assembly 22. The body portion 2311 and the abutting portion 2312 are integrally formed. Along the thickness direction X of the wall portion, the connecting member 232 is located on a side of the wall portion 211 facing away from the electrode assembly 22. An end of the body portion 2311 away from the electrode assembly 22 is riveted to the connecting member 232. The connecting member 232 cooperates with the abutting portion 2312 to clamp the wall portion 211 so as to fasten the electrode terminal 23 to the wall portion 211. The connecting member 232 includes a first material layer 2321 and a second material layer 2322 that are stacked along the thickness direction X of the wall portion and compositely connected to each other. The first material layer 2321 is located on a side of the second material layer 2322 facing away from the electrode assembly 22. The first material layer 2321 is electrically connected to the body portion 2311 of the pole 231, and the first material layer 2321 is configured to be welded to a busbar. A material of the first material layer 2321 is the same as a material of the busbar. A melting point of the second material layer 2322 is higher than a melting point of the first material layer 2321. The melting point of the first material layer 2321 is MP₁, and the melting point of the second material layer 2322 is MP₂, satisfying MP₂ - MP₁ ≥ 200°C. Along the thickness direction X of the wall portion, a thickness of the first material layer 2321 is D₁, and a thickness of the second material layer 2322 is D₂, satisfying 0.1 ≤ D₂ / D₁ ≤ 0.25. The material of the first material layer 2321 includes aluminum, and the material of the second material layer 2322 includes steel. Along the thickness direction X of the wall portion, the first insulating member 26 is at least partially disposed between the second material layer 2322 of the connecting member 232 and the wall portion 211, and the first insulating member 26 is configured to insulatively isolate the connecting member 232 and the wall portion 211. Along the thickness direction X of the wall portion, the second insulating member 27 is at least partially disposed between the abutting portion 2312 of the pole 231 and the wall portion 211, and the second insulating member 27 is configured to insulatively isolate the pole 231 and the wall portion 211. The sealing member 28 is disposed between the wall portion 211 and the pole 231, the sealing member 28 is at least partially located in the mounting hole 2111, the sealing member 28 is sleeved on an outer side of the body portion 2311 of the pole 231, and the sealing member 28 is configured to seal a gap between the pole 231 and a wall surface of the mounting hole 2111. Along the thickness direction X of the wall portion, an accommodating groove 2112 is provided on the side of the wall portion 211 facing away from the electrode assembly 22. The mounting hole 2111 is provided on a bottom surface of the accommodating groove 2112. The first insulating member 26 is at least partially accommodated in the accommodating groove 2112.

According to some embodiments of this application, referring to FIGs. 3, 4, and 7, this application provides a battery cell 20. The battery cell 20 includes a housing 21, an electrode assembly 22, and an electrode terminal 23. The housing 21 has a wall portion 211. The wall portion 211 is provided with a mounting hole 2111. The mounting hole 2111 runs through the wall portion 211 along a thickness direction X of the wall portion. The housing 21 includes a housing body 212 and an end cover 213. An accommodating cavity having an opening 2121 is formed inside the housing body 212. The end cover 213 seals the opening 2121, and the end cover 213 is the wall portion 211. The electrode assembly 22 is accommodated in the accommodating cavity. The electrode terminal 23 includes a pole 231 and a connecting member 232. The pole 231 includes a body portion 2311 and an abutting portion 2312. The body portion 2311 extends through the mounting hole 2111 along the thickness direction X of the wall portion. The abutting portion 2312 abuts against a side of the wall portion 211 facing the electrode assembly 22, and the abutting portion 2312 is electrically connected to a tab 221 of the electrode assembly 22. The body portion 2311 and the abutting portion 2312 are integrally formed. Along the thickness direction X of the wall portion, the connecting member 232 is located on a side of the wall portion 211 facing away from the electrode assembly 22. An end of the body portion 2311 away from the electrode assembly 22 is riveted to the connecting member 232. The connecting member 232 cooperates with the abutting portion 2312 to clamp the wall portion 211 so as to fasten the electrode terminal 23 to the wall portion 211. The connecting member 232 includes a first material layer 2321 and a second material layer 2322 that are stacked along the thickness direction X of the wall portion and compositely connected to each other. The first material layer 2321 is located on a side of the second material layer 2322 facing away from the electrode assembly 22, the first material layer 2321 is electrically connected to the body portion 2311 of the pole 231, and the first material layer 2321 is configured to be welded to a busbar. A material of the first material layer 2321 is the same as a material of the busbar. A melting point of the second material layer 2322 is higher than a melting point of the first material layer 2321. The melting point of the first material layer 2321 is MP₁, and the melting point of the second material layer 2322 is MP₂, satisfying MP₂ - MP₁ ≥ 200°C. Along the thickness direction X of the wall portion, a thickness of the first material layer 2321 is D₁, and a thickness of the second material layer 2322 is D₂, satisfying 0.1 ≤ D₂ / D₁ ≤ 0.25. The material of the first material layer 2321 includes aluminum, and the material of the second material layer 2322 includes steel. The second material layer 2322 is welded to the wall portion 211 and forms a weld mark. The weld mark surrounds an outer side of the mounting hole 2111. The material of the second material layer 2322 is the same as a material of the wall portion 211. Along the thickness direction X of the wall portion, an accommodating groove 2112 is provided on the side of the wall portion 211 facing away from the electrode assembly 22. The mounting hole 2111 is provided on a bottom surface of the accommodating groove 2112. The connecting member 232 is at least partially accommodated in the accommodating groove 2112. The second material layer 2322 is welded to the bottom surface of the accommodating groove 2112.

It should be noted that, without conflict, the embodiments and features in the embodiments in this application may be combined with each other.

The above are only preferred embodiments of this application and are not intended to limit this application. For those skilled in the art, this application may have various changes and modifications. Any modifications, equivalent replacements, improvements, and the like made within the spirit and principles of this application shall fall within the protection scope of this application.

## Claims

1. A battery cell, comprising:
a housing having a wall portion, wherein the wall portion is provided with a mounting hole, and the mounting hole runs through the wall portion along a thickness direction of the wall portion;
an electrode assembly accommodated in the housing; and
an electrode terminal comprising a pole and a connecting member, wherein the pole extends through the mounting hole, the pole is electrically connected to the electrode assembly, and along the thickness direction of the wall portion, the connecting member is located on a side of the wall portion facing away from the electrode assembly, and the connecting member is connected to the pole;
wherein the connecting member comprises a first material layer and a second material layer stacked along the thickness direction of the wall portion, the first material layer is located on a side of the second material layer facing away from the electrode assembly, the first material layer is electrically connected to the pole and configured to be connected to a busbar, and a melting point of the second material layer is higher than a melting point of the first material layer.

2. The battery cell according to claim 1, wherein: the melting point of the first material layer is MP₁, and the melting point of the second material layer is MP₂, satisfying MP₂ - MP₁ ≥ 200°C.

3. The battery cell according to claim 1 or 2, wherein: along the thickness direction of the wall portion, a thickness of the first material layer is D₁, and a thickness of the second material layer is D₂, satisfying 0.1 ≤ D₂ / D₁ ≤ 0.25.

4. The battery cellaccording to any one of claims 1 to 3, wherein: the first material layer and the second material layer are compositely connected to each other.

5. The battery cell according to any one of claims 1 to 4, wherein: a material of the first material layer comprises aluminum, and a material of the second material layer comprises steel.

6. The battery cell according to any one of claims 1 to 5, wherein: the pole comprises:
a body portion extending through the mounting hole along the thickness direction of the wall portion, wherein the body portion is connected to the connecting member; and
an abutting portion abutting against a side of the wall portion facing the electrode assembly, wherein the abutting portion cooperates with the connecting member to clamp the wall portion so as to fasten the electrode terminal to the wall portion.

7. The battery cell according to claim 6, wherein: the body portion is riveted to the first material layer.

8. The battery cell according to any one of claims 1 to 7, wherein: the electrode terminal is insulatively mounted on the wall portion.

9. The battery cell according to claim 8, wherein: the battery cell further comprises:
a first insulating member, wherein along the thickness direction of the wall portion, the first insulating member is at least partially disposed between the connecting member and the wall portion, and the first insulating member is configured to insulatively isolate the connecting member and the wall portion; and
a second insulating member, wherein along the thickness direction of the wall portion, the second insulating member is at least partially disposed between the pole and the wall portion, and the second insulating member is configured to insulatively isolate the pole and the wall portion.

10. The battery cell according to claim 9, wherein: the battery cell further comprises:
a sealing member disposed between the wall portion and the pole, wherein the sealing member is at least partially located in the mounting hole, and the sealing member is configured to seal a gap between the pole and a wall surface of the mounting hole.

11. The battery cell according to claim 9 or 10, wherein: along the thickness direction of the wall portion, an accommodating groove is provided on the side of the wall portion facing away from the electrode assembly, the mounting hole is provided on a bottom surface of the accommodating groove, and the first insulating member is at least partially accommodated in the accommodating groove.

12. The battery cell according to any one of claims 1 to 7, wherein: the second material layer is welded to the wall portion.

13. The battery cell according to claim 12, wherein: the second material layer is welded to the wall portion and forms a weld mark, and the weld mark surrounds an outer side of the mounting hole.

14. The battery cell according to claim 12 or 13, wherein: a material of the second material layer is the same as a material of the wall portion.

15. The battery cell according to any one of claims 12 to 14, wherein: along the thickness direction of the wall portion, an accommodating groove is provided on the side of the wall portion facing away from the electrode assembly, the mounting hole is provided on a bottom surface of the accommodating groove, the connecting member is at least partially accommodated in the accommodating groove, and the second material layer is welded to the bottom surface of the accommodating groove.

16. The battery cell according to any one of claims 1 to 15, wherein: the housing comprises:
a housing body internally provided with an accommodating cavity having an opening, wherein the accommodating cavity is configured to accommodate the electrode assembly; and
an end cover sealing the opening;
wherein the end cover is the wall portion.

17. The battery cell according to any one of claims 1 to 15, wherein: the housing comprises:
a housing body comprising a side wall and the wall portion that are integrally formed, wherein the side wall surrounds the wall portion; along the thickness direction of the wall portion, one end of the side wall is connected to the wall portion, and another end encloses an opening; and the side wall and the wall portion jointly define an accommodating cavity configured to accommodate the electrode assembly; and
an end cover sealing the opening.

18. A battery, **characterized by** comprising the battery cell according to any one of claims 1 to 17.

19. The battery according to claim 18, wherein: the battery further comprises:
a busbar welded to the first material layer such that the busbar is electrically connected to the pole.

20. The battery according to claim 19, wherein: a material of the busbar is the same as the material of the first material layer.

21. An electric apparatus, comprising the battery cell according to any one of claims 1 to 17, wherein the battery cell is configured to provide electrical energy.
